# EUROPEAN PATENT SPECIFICATION

(11) **EP 3 838 214 B1**
(45) Date of publication and mention of the grant of the patent: **06.12.2023**
(21) Application number: 19216892.0
(22) Date of filing: 17.12.2019
(51) Int. Cl.: A61C 8/00, A61C 13/00

(54) **A CAD METHOD FOR GENERATING A VIRTUAL SUPERSTRUCTURE FOR A CUSTOMIZED DENTAL PROSTHESIS AND PROVIDING THE SAME.**
EIN CAD-VERFAHREN ZUR ERZEUGUNG EINER VIRTUELLEN SUPERSTRUKTUR FÜR EINE ANGEPASSTE ZAHNPROTHESE UND DESSEN BEREITSTELLUNG.
PROCÉDÉ CAD POUR CRÉER UNE SUPERSTRUCTURE VIRTUELLE POUR UNE PROTHÈSE DENTAIRE PERSONNALISÉE ET FOURNIR CELLE-CI.

(43) Date of publication of application: 23.06.2021
(73) Proprietor: CLINICA SAN MARTINO S.R.L., 23864 Malgrate (LC) (IT)
(72) Inventor: PIASINI, Bruno, 23020 Montagna in Valtellina SO (IT); PEDRETTI, Giorgio Giovanni, Morbio Inferiore (CH)
(74) Representative: Modiano, Micaela Nadia

(56) References cited:
- EP-A1- 2 345 386
- EP-A1- 3 067 012
- US-A1- 2016 270 886
- US-A1- 2018 125 614

## Description

The present invention relates to a method for providing a superstructure for a customized dental prosthesis on implants.

The present invention further relates to a method for generating a virtual CAD model of a superstructure for a customized dental prosthesis on implants, the corresponding sectioning method by way of a computer program, and the virtual CAD model of the multiple-element superstructure obtained by way of the aforementioned method.

Dental prostheses are used to recreate the anatomical and functional structure of a tooth, of a group of teeth or even of an entire dental arch. Dental prostheses of a group of teeth or of an entire dental arch have greater problems, and are the specific subject matter of the present invention.

Such prostheses are generally made of a material requested by the clinic, for example of the type of titanium, and comprise a cosmetic veneer. Such prostheses thus reproduce not only the aesthetics, but also the function of the natural dentition.

Dental prostheses can be cemented or screwed-in; the latter - to which the present invention related - are nowadays generally preferred since they permit the immediate masticatory loading of the prostheses, and they can be easily removed, for replacement or repair.

Screwed-in dental prostheses usually comprise a superstructure which, essentially, reproduces the shape and the function of the crowns of the teeth, and dental implants, which are first positioned in the maxillary bone or mandible bone and to which the superstructure is screwed.

In order to provide the superstructure, production systems are known, among others, which use CAD/CAM technology. Such systems entail the production of a virtual CAD model (Computer-Aided Design) of the superstructure that it is desired to make, and its subsequent production using CAM (Computer-Aided Manufacturing) techniques.

Also known are systems that involve the inclination of the channel of insertion of the screw or of the screwdriver, but these cannot exceed 25° and must coincide with the position of the implant, systems with primary and secondary bars which as such are designed and made separately without taking account of the requirements of individual sectors of the superstructure with respect to the implants but only of the superstructure overall, there being only two parts.

It is known that the correct positioning of the dental implants in the bone is absolutely critical as the superstructure, which will be screwed into such implants, will be able to withstand the masticatory loads required. In particular, the dental implants should be positioned while scrupulously following the bone anatomy of the alveolar processes, so as to favor their osseointegration. In fact, the greater the length of the dental implant inserted in the bone, which also varies as a function of the direction of the implant axis with respect to the bone itself, the greater the implantation insertion torque will be, and the greater the primary stability of the dental implant and of the superstructure screwed into it, and also the possibility of withstanding the masticatory loads.

Although useful and practical, conventional screwed-in dental prostheses are not devoid of drawbacks, among which is the fact that the particular direction and position, in the bone, of the axis of the dental implant onto which the superstructure is to be screwed, is such that the hole that permits the passage of the screw for anchoring the superstructure to the implant often protrudes from the vestibular face of the dental prosthesis, i.e. from the visible and aesthetic surface of the dental prosthesis.

Since the position and the direction of the implant axis with respect to the bone are of fundamental importance for the primary stability of the implant and consequently of the dental prosthesis, the aesthetic problem of avoiding the presence of the entry holes of the anchoring screws on the visible and aesthetic surface of the dental prosthesis generally takes second place.

In fact, nowadays, in the event of significant inclinations of the dental implant, the holes of the screws are allowed to exit on the visible face of the superstructure, and they are then closed later with material, producing aesthetic results that are completely unsatisfactory.

Furthermore, in conventional dental prostheses, in order to repair, clean or replace the superstructure it is necessary to also remove all the interfaces that ensure the connection of the superstructure with the dental implants. This necessity is particularly disadvantageous in that firstly it entails inconveniences and costs for the patient, and secondly it can cause problems in the area around the implant, it being necessary to disturb the delicate biological equilibrium between the implant, the superstructure and the gum.

The aim of the present invention consists of devising a method for providing a superstructure for a dental prosthesis that solves the above technical problem, compensates for the drawbacks and overcomes the limitations of the known art by making it possible to safeguard both the functionality and the aesthetics of the dental prosthesis.

Within this aim, an object of the present invention is to devise a method that enables the provision of a superstructure for a customized dental prosthesis, which is capable of ensuring the best compromise between functionality and aesthetics.

Another aim of the invention is to devise a method for providing superstructures for customized dental prostheses as a function of the specific anatomy of the patient.

Another aim of the invention consists in devising a method for providing a superstructure for a dental prosthesis which is capable of offering the widest guarantees of reliability, safety in use and above all long durability over time.

Another aim of the invention is to devise a superstructure for a dental prosthesis that can be repaired, replaced and cleaned without needing to intervene and disturb the delicate biological equilibrium between the implant, the superstructure and the gum.

EP 2345386 discloses a superstructure for a customized dental prosthesis.

EP3067012 discoses a method for generating a virtual CAD model of a custom dental prosthesis comprising the steps of:
i. having a starting virtual CAD model of said dental prosthesis in which at least one entry implant hole is defined for an implant screw for fixing said dental prosthesis to a dental implant, said implant hole having a longitudinal extension along an implantation axis;
ii. sectioning said starting virtual CAD model of said dental prosthesis by way of at least one cutting plane that is transverse to said implantation axis so as to subdivide said starting virtual CAD model of said dental prosthesis into a first component, or prosthetic element, and into at least one second component, or connecting element, producing respectively a virtual CAD model of said prosthetic element and a virtual CAD model of said at least one connecting element;
iii. defining, in said virtual CAD model of said prosthetic element, at least one entry hole for a screw for fixing said prosthetic element to said at least one connecting element, said at least one hole having a longitudinal extension along a prosthetic axis;
iv. selecting in said virtual CAD model of said prosthetic element an angle of inclination of said prosthetic axis with respect to said implantation axis such that said at least one hole is arranged on the inner side of said dental prosthesis.
US 2016/270 886 and US 2018/125614 are documents in the same technological field as the present invention.

This aim and these and other objects which will become better apparent hereinafter are achieved by a computer-implemented method for generating a virtual CAD model of a superstructure for a customized dental prosthesis of a group of teeth or a dental arch as defined in claim 1.

This aim and these and other objects which will become better apparent hereinafter are also achieved by a method for providing a superstructure for a customized dental prosthesis according to claim 7.

Further characteristics and advantages of the invention will become better apparent from the description of four preferred, but not exclusive, embodiments of a superstructure for a customized dental prosthesis, which are illustrated by way of non-limiting example with the aid of the accompanying drawings wherein:
Figure 1 is a perspective view, from the innermost side, of a first embodiment of a superstructure according to the method of the invention, with the components separated;
Figure 2 is a perspective view, from the vestibular side, of the superstructure in Figure 1;
Figure 3 is a perspective view, from the innermost side, of a second embodiment of a superstructure according to the method of the invention, with the components separated;
Figure 4 is a perspective view, from the innermost side, of a third embodiment of a superstructure according to the method of the invention, with the components separated;
Figure 5 is a perspective view, from the innermost side, of a fourth embodiment of a superstructure according to the method of the invention, with the components separated;
Figures 6A and 6B are further perspective views of the superstructure in Figure 5, respectively with the components separated and assembled, in which a cross-section has been made along a vertical plane;

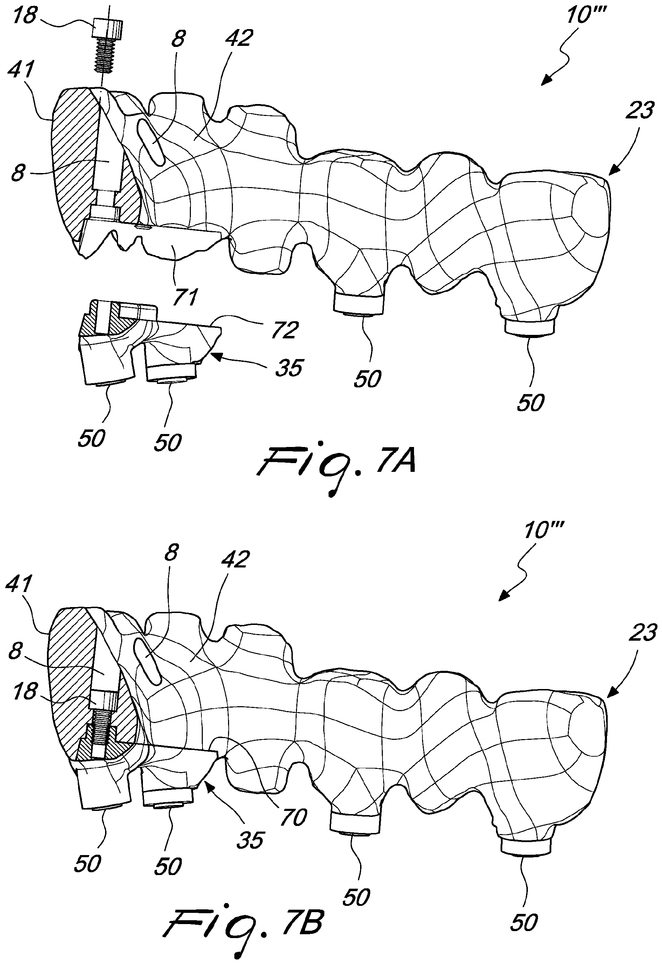

Figures 7A and 7B are perspective views of the superstructure in Figures 6A and 6B, respectively with the components separated and assembled, in which a cross-section has been made along a different vertical plane;
Figure 8 is an additional cross-section of the superstructure in Figures 6B, 7B;
Figure 9 is a lateral cross-section of part of a prostheses that comprises the superstructure in Figure 8, implanted in an oral cavity in the anatomical configuration for use.

With reference to the figures, the invention relates to a method for manufacturing a superstructure for a customized dental prosthesis for a group of teeth or dental arch, which is generally designated by the reference numerals 10, 10', 10" and 10‴ according to the embodiment. In more detail, such method includes a method for generating a virtual CAD model of such superstructure 10, 10', 10", 10‴.

For the purposes of clarity, it is useful to note that, hereinafter, the term "superstructure" is used to mean the part of a dental prosthesis that is adapted to be fixed to a plurality of dental implants 90 which are fixed below a gingival plane G (i.e. the plane tangential to the top of the gum A) in order to replace multiple teeth or a dental arch. Inn practice, the superstructure 10, 10', 10", 10‴ is the part of the prosthesis that is at least partially visible, which reproduces the shape and the function of the crowns of the teeth.

The term prostheses therefore is used to mean the overall system, which comprises the superstructure 10, 10', 10", 10‴ and the implants 90. Since the structure, operation and manufacturing processes of implants 90 are well known and are not the subject matter of the present invention, the description will be limited to the superstructure 10, 10', 10", 10‴.

In particular it is useful to note that, in general, each superstructure 10, 10', 10", 10‴ comprises a vestibular face 41, which is adapted to be directed toward the vestibular side of the oral cavity and which therefore is visible in the anatomical configuration for use (i.e. when implanted in the oral cavity of the patient for which it is made), and a lingual/palatal face 42, which is adapted to be directed toward the inside of the oral cavity and which is therefore hidden (not visible to the observer, usually the wearer of the prosthesis) in the anatomical condition for use.

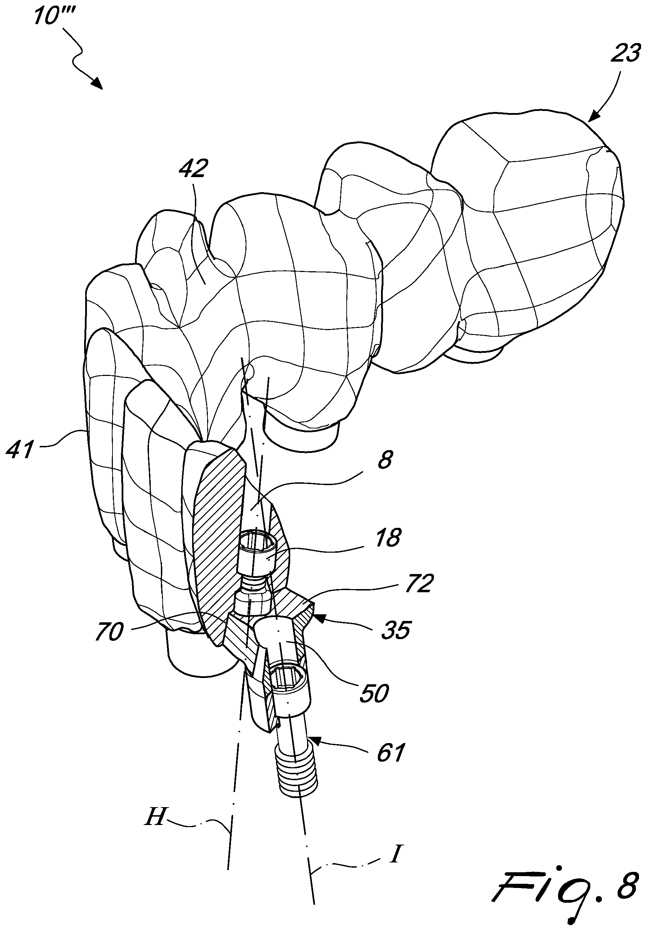

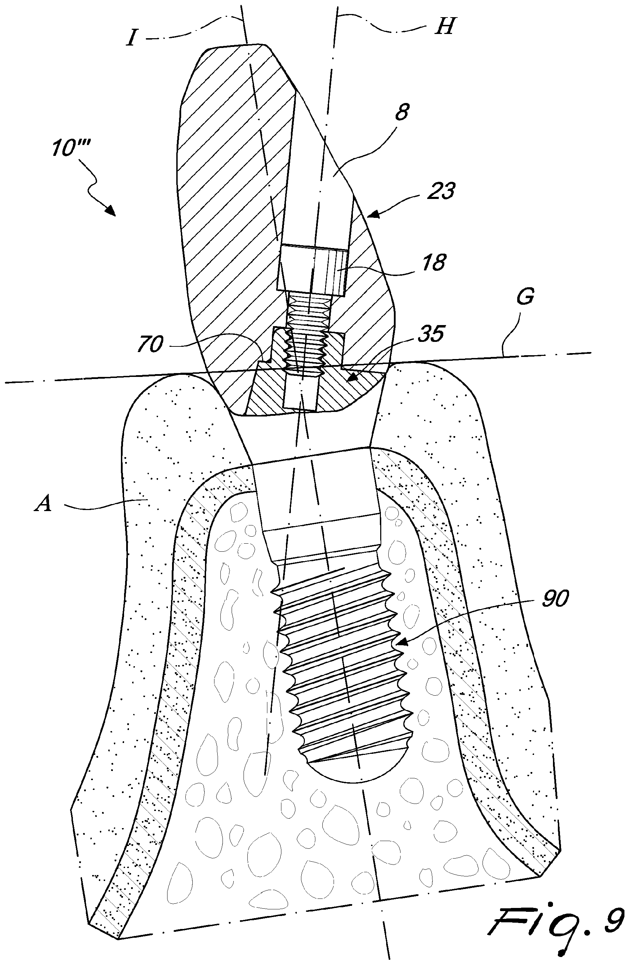

According to the invention, the method for generating a virtual CAD (Computer-Aided Design) model of the superstructure 10, 10', 10", 10‴ comprises a first step of:
a. having an initial virtual CAD model of the superstructure 10, 10', 10", 10‴ in which a plurality of implant holes 50 are defined, each one of which:
   - has a longitudinal extension along a respective implant axis I and
   - is adapted to be aligned with a respective dental implant 90 in order to be fixed thereto by way of a fixing element 61 (for example a screw) which passes through the implant hole 50; in practice, as is evident from Figures 8 and 9, in the anatomical condition for use the implant hole 50 and the respective dental implant 90 have a longitudinal axis that coincides with the implant axis I.

The initial virtual CAD model of the superstructure 10, 10', 10", 10‴ is a model that can be obtained according to known standard methods. Such standard methods can for example involve the creation of a morphological resin model of the dental prosthesis, which can be mounted on a plaster model that replicates, by way of analogues, the faithful position of the dental implants inside the mouth of the patient. Such standard methods then involve performing a 3D scan of such morphological resin model, in order to obtain a virtual CAD model thereof which constitutes the initial virtual CAD model of the superstructure 10, 10', 10", 10‴ that it is desired to produce.

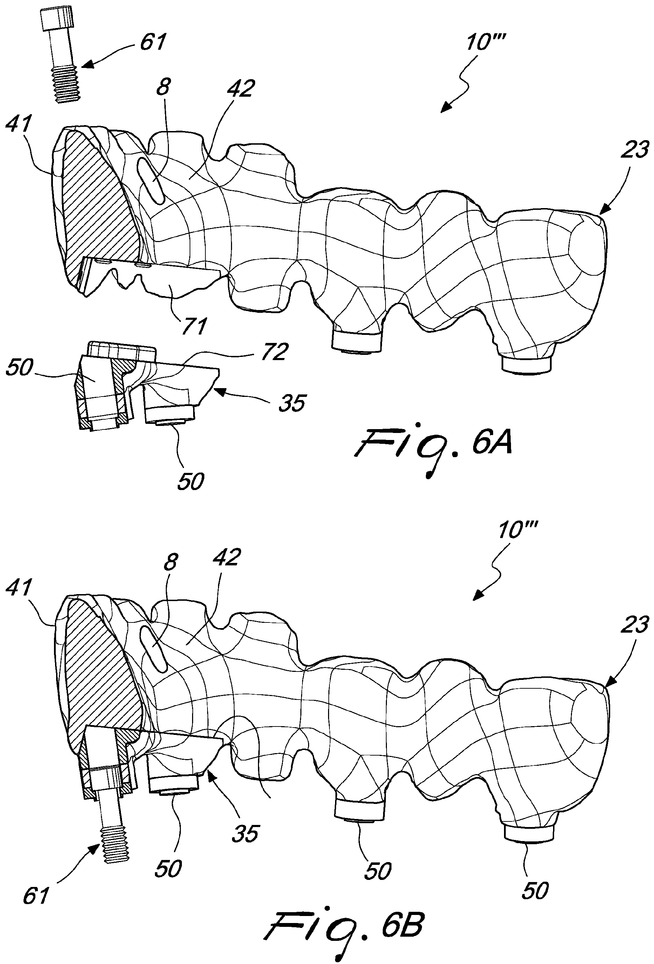

The implant holes 50 are defined, in the CAD model, so as to be aligned with the implants 90, along a same implant axis I (as illustrated for example in Figures 6b, 8 and 9). The position of the implants 90 is determined, as is known, by the anatomical structure of the patient. An implant hole 50 is therefore defined for each implant 90.

The method according to the invention then comprises a second step of:
b. sectioning the initial virtual CAD model along one or more cutting surfaces 70 (and preferably along a plurality of cutting surfaces 70 in order to better comply with the design anatomy of the superstructure) so as to subdivide the CAD model into an extra-gingival component 20, 21, 22, 23 and into one or more intra-gingival connecting components 31, 32, 33, 34, 35, 36, generating respectively a virtual CAD module of the extra-gingival component 20, 21, 22, 23 and a CAD model of each one of the one or more intra-gingival connecting components 31, 32, 33, 34, 35, 36. In more detail, the initial CAD model is subdivided so that each intra-gingival connecting component 31, 32, 33, 34, 35, 36 comprises at least two implant holes 50, so that in this manner each intra-gingival connecting component 31, 32, 33, 34, 35, 36 will be anchored, in the anatomical condition for use, to at least two implants 90, thus eliminating the need to have a rotation-preventing interface.

Advantageously, the cutting surfaces 70 comprise planes and/or curved surfaces and/or irregular surfaces. For example, in some embodiments the cutting surfaces 70 comprise planes and curved surfaces, in others only planes, and in yet others only irregular surfaces. In general the cutting surfaces 70 can have any type of complex geometry according to requirements.

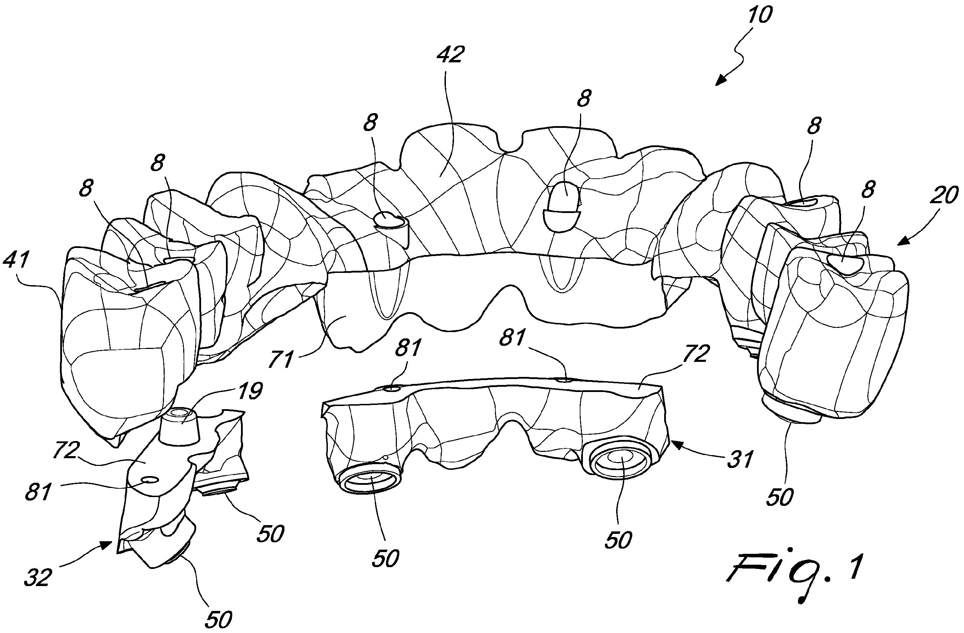

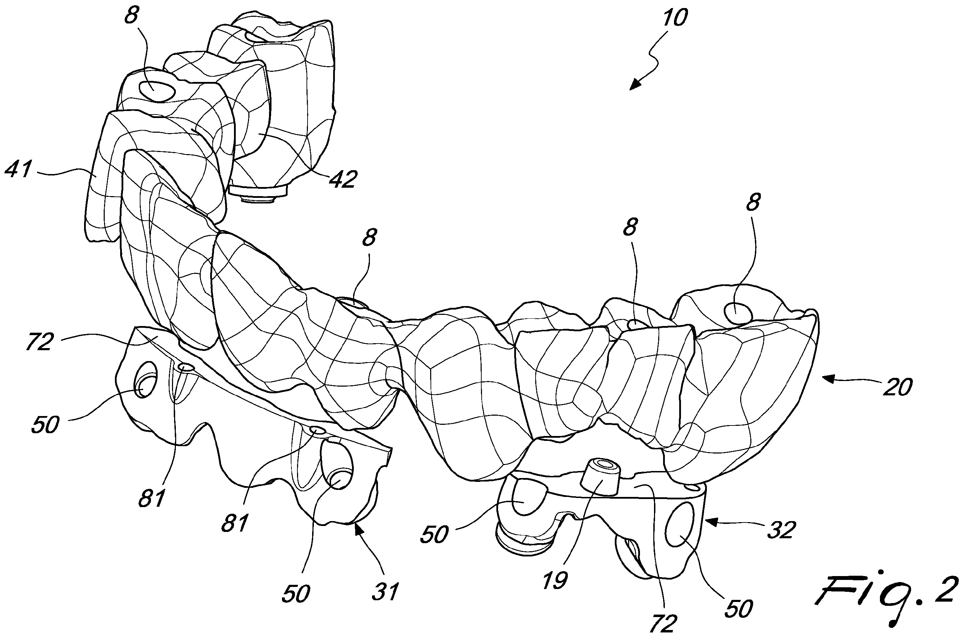

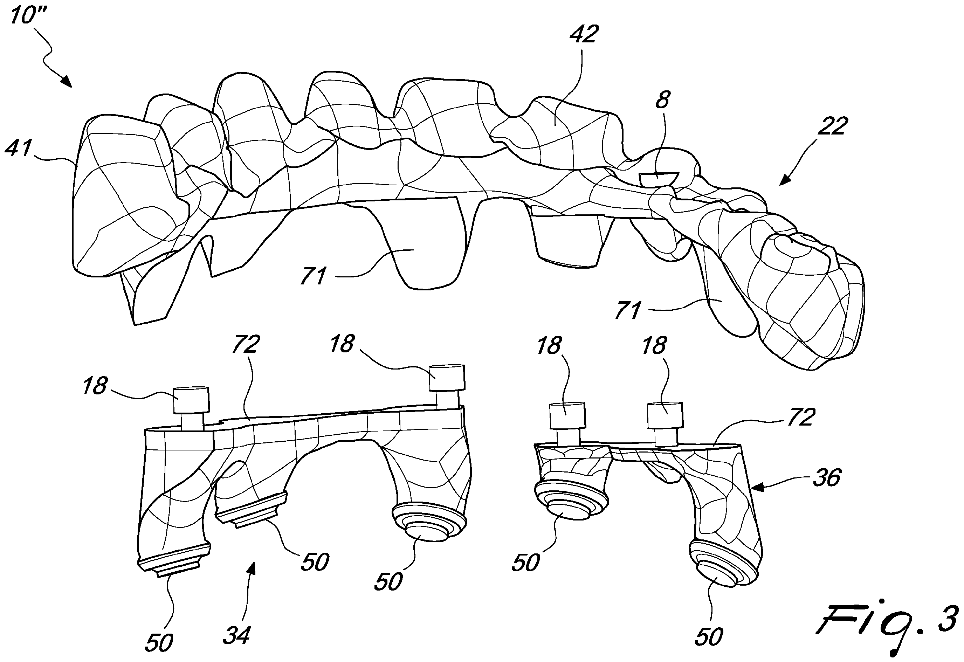

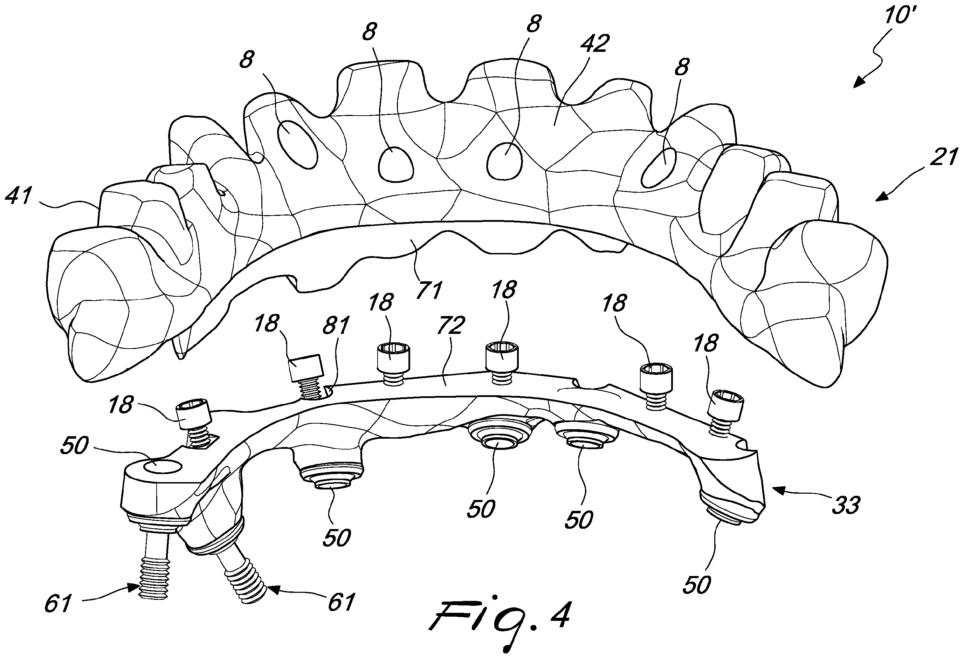

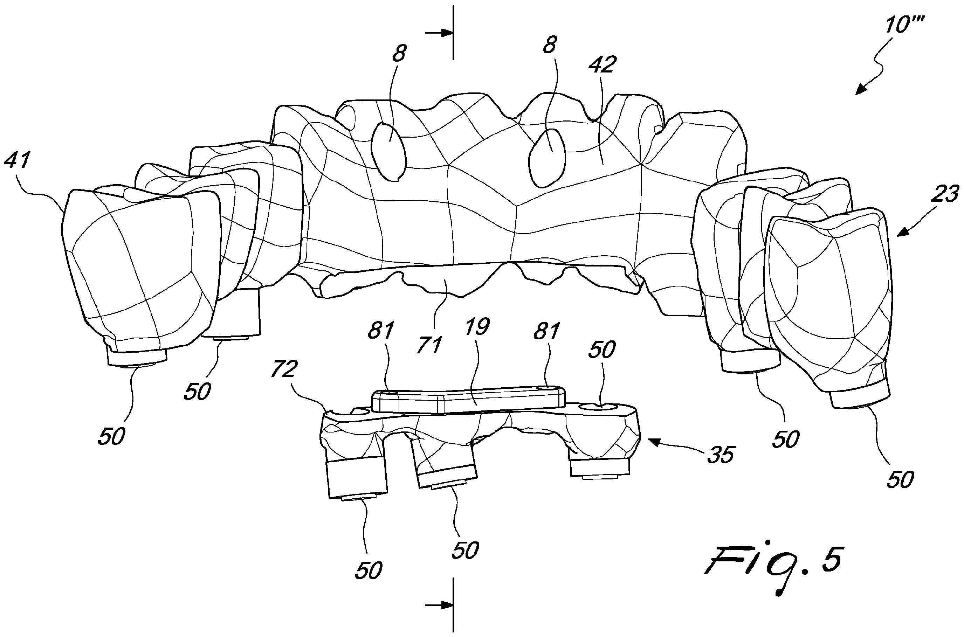

Note that the initial CAD model is sectioned so as to obtain a single extra-gingival component 20, 20, 21, 22, 23 (obviously different for each embodiment), while the intra-gingival connecting components 31, 32, 33, 34, 35, 36 are one in number (as in the examples shown in Figures 4 and 5) or more than one in number (as in the examples shown in Figures 1-3) according to requirements.

Preferably, the cutting surfaces 70 are defined in such a manner that the vestibular face 41 of the superstructure (i.e. the visible face) is completely comprised within the extra-gingival component 20, 21, 22, 23 and is therefore constituted by a single surface, preferably continuous, that extends downward preferably at least to the gingival plane G, in the anatomical condition for use. In this manner, to an observer looking at the patient wearing the prosthesis, no cutting line or join line will be visible, i.e. the intra-gingival connecting components 31, 32, 33, 34, 35, 36 will not be visible, even partially.

In some embodiments, as in the example in Figure 9, the vestibular face 41 of the superstructure 10‴ extends below the gingival plane G, so that the intra-gingival connecting component 35 will remain hidden even in the event of the gum A receding.

The intra-gingival connecting components 31, 32, 33, 34, 35, 36 are defined so as to be positioned below the extra-gingival component 20, 21, 22, 23, so as to be hidden from view by the latter, and more precisely between at least some of the extra-gingival component 20, 21, 22, 23 and at least some of the dental implants 90.

In fact, as will become clearer below, the function of the intra-gingival connecting components 31, 32, 33, 34, 35, 36 is to connect the extra-gingival component 20, 21, 22, 23 to at least part of the dental implants 90, by being fixed to these by way of the fixing elements 61 passing through the implant holes 50.

In some embodiments, for example those shown in Figures 1, 2 and 5, the cutting surfaces 70 are defined so that the extra-gingival component 20, 21, 22, 23 comprises at least one of the implant holes 50 for the direct fixing of the extra-gingival component 20, 21, 22, 23 to at least one respective dental implant 90, given that such implant hole 50 does not interfere with the vestibular surface 41 in the aesthetic zone. In some of the examples shown, the extra-gingival component 20, 21, 22, 23 comprises a plurality of implant holes 50 for the direct fixing of the extra-gingival component 20, 21, 22, 23 to a corresponding number of dental implants 90.

Note that, in the preferred embodiments, at least some of the implant holes 50 do not pass through the extra-gingival component 20, 21, 22, 23 and therefore such implant holes 50 do not impact on the vestibular face 41 of the superstructure 10, 10', 10", 10'", either from the aesthetic point of view or from the functional point of view.

In any case, as a result of the subdivision, the extra-gingival component 20, 21, 22, 23 is provided with one or more first interface surfaces 71 that match up with and are complementary to respective second interface surfaces 72 which are present on the intra-gingival connecting components 31, 32, 33, 34, 35, 36 and are adapted to be arranged adjacent to the latter in the anatomical configuration for use.

As is evident, the first 71 and the second 72 interface surfaces correspond to the cutting surfaces 70 that defined them and therefore, in turn, they can comprise planes and/or curved surfaces and/or irregular surfaces.

The method, according to the invention, further comprises a third step of:
c. for each one of the intra-gingival connecting components 31, 32, 33, 34, 35, 36, defining, in the CAD model of the extra-gingival component 20, 21, 22, 23, at least one not necessarily through connecting hole or system 8, which is adapted to be engaged by a connecting element 18 (not necessarily a screw) for fixing the extra-gingival component 20, 21, 22, 23 to the intra-gingival connecting component 31, 32, 33, 34, 35, 36.

In practice, in the anatomical configuration for use, when the joining elements 18 are tightened, the first interface surfaces 71 go into abutment on the second interface surfaces 72 so that the intra-gingival connecting components 31, 32, 33, 34, 35, 36 are joined with the extra-gingival component 20, 21, 22, 23 thus forming a single body which corresponds externally to the initial CAD model.

The connecting hole 8 is meant to be any passage or recess, having any suitable cross-section, defined in the extra-gingival component 20, 21, 22, 23 and adapted to be engaged by a connecting element 18.

Preferably the joining elements 18 comprise screws, or the like, and in the one or more intra-gingival connecting components 31, 32, 33, 34, 35, 36, a respective complementary hole 81 is defined at each connecting hole 8, and is provided for example with an internal female threading, which is adapted to be engaged by the connecting element 18 (i.e. by the end part of the screw) in order to achieve the fixing of the extra-gingival component 20, 21, 22, 23 to the intra-gingival connecting component 31, 32, 33, 34, 35, 36.

Optionally, complementary connecting elements 19 are also defined in the intra-gingival connecting components 31, 32, 33, 34, 35, 36, such as for example protrusions that are adapted to engage respective complementary recesses provided in the extra-gingival component 20, 21, 22, 23.

Advantageously, the at least one connecting hole 8 is defined in a portion of the lingual/palatal face 42 that is comprised in the extra-gingival component 20, 21, 22, 23, so that it is not visible from the vestibular side (i.e. not visible to an observer looking at the patient wearing the prosthesis) in the anatomical configuration for use.

In this manner, in the anatomical configuration for use, both the intra-gingival connecting components 31, 32, 33, 34, 35, 36 and the connecting holes 8 are hidden, to the advantage of the aesthetic result.

In some embodiments, at least one of the connecting holes 8 is defined so as to be misaligned with respect to all the dental implants 90 (meaning it is not aligned with any dental implant 90, i.e. it extends longitudinally along a joining axis H which does not coincide with any implant axis I) and/or a different number of connecting holes 8 is defined from the number of dental implants 90. See for example Figure 5, in which in the intra-gingival connecting component 35 there are three implant holes 50 and in the extra-gingival component 22 only two connecting holes 8 are defined, none of which are aligned with any implant hole 50 (and therefore with any dental implant 90).

In practice, it is therefore possible to define a number of connecting holes 8, and of respective joining elements 18, which is different from the number of dental implants 90, and it is possible to distribute them in an aesthetically and functionally advantageous manner; furthermore, if - as in the examples shown - some of the connecting holes 8 are through holes, these can in any case be positioned in suitable zones, following the orientation of the teeth.

In practice, the method now described is usually implemented by a computer program, stored on an information technology medium, by way of which it is therefore possible to provide a method for sectioning a superstructure.

The present invention also relates to a method for providing a superstructure 10, 10', 10", 10‴ for a customized dental prosthesis of a group of teeth or a dental arch, which comprises a method for generating a virtual CAD model of a superstructure 10, 10', 10", 10‴ as described up to this point and the further steps of:
d. providing, by way of a CAM system, respectively the extra-gingival component 20, 21, 22, 23 and the one or more intra-gingival connecting components 31, 32, 33, 34, 35, 36 and optionally, if it is needed, also providing an external aesthetic/functional covering; the CAM (Computer-Aided Manufacturing) techniques are well known and do not require further explanation;
e. associating, by way of the at least one connecting element 18, each intra-gingival connecting component 31, 32, 33, 34, 35, 36 with the extra-gingival component 20, 21, 22, 23.

Optionally, at least part of one or more intra-gingival connecting components 31, 32, 33, 34, 35, 36 is covered with an aesthetic/functional covering, during the step d. just described or subsequently; the covering operation can also take place after installation of the prosthesis as a result of unexpected necessity, for example receding of the gum.

A superstructure 10, 10', 10", 10‴ for a customized dental prosthesis of a group of teeth or a dental arch is obtainable from the production method described above and which therefore has the characteristics described above with reference to the virtual CAD model.

Therefore, all the characteristics described, even if not explicitly indicated, should be understood to refer both to the virtual CAD model and to the superstructure 10, 10', 10", 10‴ that is physically produced.

Here all that is said is that, in its general features common to all embodiments, the superstructure 10, 10', 10", 10‴ comprises:
- a vestibular face 41, adapted to be directed toward the vestibular side of the oral cavity,
- a lingual/palatal face 42, adapted to be directed toward the lingual/palatal side of the oral cavity,
- a plurality of implant holes 50, each one of which has a longitudinal extension along a respective implant axis I and is adapted to be aligned with a respective dental implant 90 in order to be fixed thereto by means of a fixing element 61 which passes through the implant hole 50.

Furthermore, according to the invention, the superstructure 10, 10', 10", 10‴ is subdivided by a plurality of cutting surfaces 70 into a extra-gingival component 20, 21, 22, 23 and one or more intra-gingival connecting components 31, 32, 33, 34, 35, 36.

In more detail, each one of the one or more intra-gingival connecting components 31, 32, 33, 34, 35, 36 comprises at least two implant holes 50, while the extra-gingival component 20, 21, 22, 23 comprises at least one connecting hole 8 which is adapted to be engaged by a connecting element 18 for fixing such extra-gingival component 20, 21, 22, 23 to the intra-gingival connecting component 31, 32, 33, 34, 35, 36.

With particular reference to Figures 8 and 9, it should be noted that the connecting hole 8 has a joining axis H which is inclined with respect to the implant axis I of the underlying implant hole 50. In some embodiments, the angle formed between the joining axis H and the underlying (or in any case closer) implant axis I is greater than 25°, and can be higher, even exceeding 90°. In general, according to the invention, the joining axes H can be oriented with any angle comprised between -120° and +120° with respect to the implant axes I.

In the example shown in Figure 9, the intra-gingival connecting component 35, in the anatomical condition for use, is arranged partially below the gingival plane G. In other embodiments, the intra-gingival connecting components 31, 32, 33, 34, 35, 36 are wholly or partially arranged completely above the gingival plane G, or completely below the gingival plane G.

In some embodiments the extra-gingival component 20, 21, 22, 23 and the intra-gingival connecting components 31, 32, 33, 34, 35, 36 are made with the same material, in other embodiments with different materials.

The extra-gingival component 20, 21, 22, 23 and the intra-gingival connecting components 31, 32, 33, 34, 35, 36 can be made, for example, with one or more of the following materials: chrome-cobalt alloy, zirconium, titanium, or another material adapted for biomedical use.

Operation of the superstructure for a customized dental prosthesis is clear and evident from the foregoing description.

Lastly, it should be noted that to carry out cleaning, repairs or maintenance, it is sufficient to remove the extra-gingival component 20, 21, 22, 23, without needing to remove the intra-gingival connecting components 31, 32, 33, 34, 35, 36 and therefore without touching the gum A.

In practice it has been found that the method for providing a CAD model of a superstructure for a customized dental prosthesis and the superstructure itself, according to the present invention, achieve the set aim and objects in that they make it possible to safeguard both the functionality and the aesthetics of the dental prosthesis.

Another advantage of the method, according to the invention, consists in that they ensure a better compromise between functionality and aesthetics.

Another advantage of the method, according to the invention, consists in that it makes it possible to provide superstructures for customized dental prostheses as a function of the specific anatomy of the patient.

Another advantage of the method, according to the invention, consists in that they allow the repair, substitution and cleaning of the extra-gingival component of the superstructure without needing to intervene and disturb the delicate biological equilibrium between the implant, the superstructure and the gum.

Another advantage of the method, according to the invention, consists in that they offer the widest guarantees of reliability and safety in use, as well as of durability over time.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A computer-implemented method for generating a virtual CAD model of a superstructure (10, 10', 10", 10‴) for a customized dental prosthesis of a group of teeth or a dental arch which is adapted to be fixed to a plurality of dental implants (90) which are fixed below a gingival plane (G) in order to replace multiple teeth or a dental arch, wherein said superstructure (10, 10', 10", 10‴) comprises a vestibular face (41), adapted to be directed toward the vestibular side of the oral cavity in the anatomical configuration for use, and a lingual/palatal face (42), adapted to be directed toward the lingual/palatal side of the oral cavity in the anatomical configuration for use, said computer-implemented method comprising the following steps:
a. having an initial virtual CAD model of said superstructure (10, 10', 10", 10‴) in which a plurality of implant holes (50) are defined, each one of which:
- has a longitudinal extension along a respective implant axis (I) and
- is adapted to be aligned with a respective dental implant (90) in order to be fixed thereto by means of a fixing element (61) which passes through said implant hole (50);
b. sectioning said initial virtual CAD model along one or more cutting surfaces (70) so as to subdivide said CAD model into an extra-gingival component (20, 21, 22, 23) and into one or more intra-gingival connecting components (31, 32, 33, 34, 35, 36), generating respectively a virtual CAD module of said extra-gingival component (20, 21, 22, 23) and a CAD model of each one of said one or more intra-gingival connecting components (31, 32, 33, 34, 35, 36), each one of said one or more intra-gingival connecting components (31, 32, 33, 34, 35, 36) comprising at least two of said implant holes (50);
c. for each one of said intra-gingival connecting components (31, 32, 33, 34, 35, 36), defining, in said CAD model of said extra-gingival component (20, 21, 22, 23), at least one connecting hole (8) which is adapted to be engaged by a connecting element (18) for fixing said extra-gingival component (20, 21, 22, 23) to said intra-gingival connecting component (31, 32, 33, 34, 35, 36).

2. The computer-implemented method according to claim 1, **characterized in that** said at least one connecting hole (8) is defined in a portion of said lingual/palatal face (42) that is comprised in said extra-gingival component (20, 21, 22, 23), so that it is not visible from the vestibular side in the anatomical configuration for use.

3. The computer-implemented method according to claim 1 or 2, **characterized in that** in step b. said one or more cutting surfaces (70) are defined in such a manner that said vestibular face (41) is completely comprised within said extra-gingival component (20, 21, 22, 23) and is constituted by a single surface that extends downward at least to the gingival plane (G) in the anatomical condition for use.

4. The computer-implemented method according to one or more of the preceding claims, **characterized in that** said one or more cutting surfaces (70) comprise planes and/or curved surfaces and/or irregular surfaces.

5. The computer-implemented method according to claim 1 or 2, **characterized in that** in step b. said one or more cutting surfaces (70) are defined so that said extra-gingival component (20, 22, 23) comprises at least one of said implant holes (50) for the direct fixing of said extra-gingival component (20, 22, 23) to at least one respective dental implant (90).

6. The computer-implemented method according to one or more of the preceding claims, **characterized in that** said at least one connecting hole (8) is defined so that it is misaligned with respect to all of said dental implants (90) and/or a number of said connecting holes (8) is defined that is different from the number of said dental implants (90).

7. A method for providing a superstructure (10, 10', 10", 10‴) for a customized dental prosthesis of a group of teeth or a dental arch, **characterized in that** it comprises a computer-implemented method for generating a virtual CAD model of a superstructure (10, 10', 10", 10‴) for a customized dental prosthesis according to one or more of claims 1 to 6 and **in that** it comprises the additional steps of:
d. providing, by way of a CAM system, respectively said extra-gingival component (20, 21, 22, 23) and said one or more intra-gingival connecting components (31, 32, 33, 34, 35, 36);
e. associating, by way of said at least one connecting element (18), each intra-gingival connecting component (31, 32, 33, 34, 35, 36) with the extra-gingival component (20, 21, 22, 23).

8. The method according to claim 7, **characterized in that** in step d. or at a subsequent time it comprises a step of:
- covering at least part of the intra-gingival connecting component (31, 32, 33, 34, 35, 36) with an aesthetic/functional covering.

## Patentansprüche

1. Ein Computer-implementiertes Verfahren zur Erzeugung eines virtuellen CAD-Modells einer Superstruktur (10, 10', 10", 10‴) für eine angepasste Zahnprothese einer Gruppe von Zähnen oder eines Zahnbogens, die ausgebildet ist, um an einer Vielzahl von Zahnimplantaten (90) befestigt zu werden, die unterhalb einer Gingivalebene (G) befestigt sind, um mehrere Zähne oder einen Zahnbogen zu ersetzen; wobei die Superstruktur (10, 10', 10", 10‴) eine vestibuläre Fläche (41) umfasst, ausgebildet, um in der anatomischen Nutzungskonfiguration der vestibulären Seite der Mundhöhle zugewandt zu sein, und eine linguale/palatinale Fläche (42), ausgebildet, um in der anatomischen Nutzungskonfiguration der lingualen/palatinalen Seite der Mundhöhle zugewandt zu sein, wobei das Computer-implementierte Verfahren folgende Schritte umfasst:
a. das Haben eines virtuellen CAD-Ausgangsmodells der Superstruktur (10, 10', 10", 10‴), in dem eine Vielzahl von Implantatlöchern (50) bestimmt sind, von denen jedes:
- eine Längsausdehnung entlang einer entsprechenden Implantatachse (I) hat und
- ausgebildet ist, um mit einem entsprechenden Zahnimplantat (90) ausgerichtet zu werden, um daran mit Hilfe eines Befestigungselements (61) befestigt zu werden, das durch das Implantatloch (50) dringt;
b. das Schneiden des virtuellen CAD-Ausgangsmodells entlang einer oder mehrerer Schneidflächen (70), um das CAD-Modell in eine extragingivale Komponente (20, 21, 22, 23) und eine oder mehrere intragingivale Verbindungskomponenten (31, 32, 33, 34, 35, 36) zu unterteilen, wodurch jeweils ein virtuelles CAD-Modul der extragingivalen Komponente (20, 21, 22, 23) und ein CAD-Modell jeder der einen oder mehreren intragingivalen Verbindungskomponenten (31, 32, 33, 34, 35, 36) erstellt werden; wobei jede der einen oder mehreren intragingivalen Verbindungskomponenten (31, 32, 33, 34, 35, 36) mindestens zwei der Implantatlöcher (50) umfasst;
c. für jede der intragingivalen Verbindungskomponenten (31, 32, 33, 34, 35, 36), das Bestimmen, in dem CAD-Modell der extragingivalen Komponente (20, 21, 22, 23), mindestens eines Verbindungslochs (8), das ausgebildet ist, um mit einem Verbindungselement (18) zur Befestigung der extragingivalen Komponente (20, 21, 22, 23) an der intragingivalen Verbindungskomponente (31, 32, 33, 34, 35, 36) in Eingriff zu stehen.

2. Das Computer-implementierte Verfahren gemäß Anspruch 1, **dadurch gekennzeichnet, dass** das mindestens eine Verbindungsloch (8) in einem Abschnitt der lingualen/palatinalen Fläche (42) bestimmt ist, der in der extragingivalen Komponente (20, 21, 22, 23) umfasst ist, so dass es in der anatomischen Nutzungskonfiguration von der vestibulären Seite nicht sichtbar ist.

3. Das Computer-implementierte Verfahren gemäß Anspruch 1 oder 2, **dadurch gekennzeichnet, dass** in Schritt b. die einen oder mehreren Schneidflächen (70) derart bestimmt sind, dass die vestibuläre Fläche (41) vollständig in der extragingivalen Komponente (20, 21, 22, 23) umfasst ist und aus einer einzelnen Oberfläche besteht, die sich im anatomischen Nutzungszustand mindestens bis zur Gingivalebene (G) nach unten erstreckt.

4. Das Computer-implementierte Verfahren gemäß einem oder mehreren der obigen Ansprüche, **dadurch gekennzeichnet, dass** die einen oder mehreren Schneidflächen (70) Ebenen und/oder gekrümmte Oberflächen und/oder unregelmäßige Oberflächen umfassen.

5. Das Computer-implementierte Verfahren gemäß Anspruch 1 oder 2, **dadurch gekennzeichnet, dass** in Schritt b. die einen oder mehreren Schneidflächen (70) so bestimmt sind, dass die extragingivale Komponente (20, 22, 23) zur direkten Befestigung der extragingivalen Komponente (20, 22, 23) an mindestens einem entsprechenden Zahnimplantat (90) mindestens eines der Implantatlöcher (50) umfasst.

6. Das Computer-implementierte Verfahren gemäß einem oder mehreren der obigen Ansprüche, **dadurch gekennzeichnet, dass** das mindestens eine Verbindungsloch (8) so bestimmt ist, dass es mit Bezug auf alle Dentalimplantate (90) versetzt ist, und/oder eine Anzahl der Verbindungslöcher (8) bestimmt ist, die sich von der Anzahl der Zahnimplantate (90) unterscheidet.

7. Ein Verfahren zum Bereitstellen einer Superstruktur (10, 10', 10", 10‴) für eine angepasste Zahnprothese einer Gruppe von Zähnen oder eines Zahnbogens, **dadurch gekennzeichnet, dass** es ein Computer-implementiertes Verfahren zur Erzeugung eines virtuellen CAD-Modells einer Superstruktur (10, 10', 10", 10‴) für eine angepasste Zahnprothese gemäß einem oder mehreren der Ansprüche 1 bis 6 umfasst, und dadurch, dass es folgende zusätzlichen Schritte umfasst:
a. das Bereitstellen, über ein CAM-System, der extragingivalen Komponente (20, 21, 22, 23) sowie der einen oder mehreren intragingivalen Verbindungskomponenten (31, 32, 33, 34, 35, 36);
b. das Verbinden, über das mindestens eine Verbindungselement (18), jeder intragingivalen Verbindungskomponente (31, 32, 33, 34, 35, 36) mit der extragingivalen Komponente (20, 21, 22, 23).

8. Das Verfahren gemäß Anspruch 7, **dadurch gekennzeichnet, dass** es in Schritt d. oder zu einem späteren Zeitpunkt folgenden Schritt umfasst:
- das Abdecken zumindest eines Teils der intragingivalen Verbindungskomponente (31, 32, 33, 34, 35, 36) mit einer ästhetischen/funktionalen Abdeckung.

## Revendications

1. Procédé mis en oeuvre par ordinateur pour créer un modèle CAD (computer-aided design) virtuel d'une superstructure (10, 10', 10", 10"') pour une prothèse dentaire personnalisée d'un groupe de dents ou d'une arcade dentaire qui est adaptée pour être fixée à une pluralité d'implants dentaires (90) qui sont fixés sous un plan gingival (G) afin de remplacer de multiples dents ou une arcade dentaire, dans lequel ladite superstructure (10, 10', 10", 10‴) comprend une face vestibulaire (41), adaptée pour être dirigée vers le côté vestibulaire de la cavité buccale dans la configuration anatomique utilisée, et une face linguale/palatale (42), adaptée pour être dirigée vers le côté lingual/palatal de la cavité buccale dans la configuration anatomique utilisée, ledit procédé mis en oeuvre par ordinateur comprenant les étapes suivantes consistant à :
a. avoir un modèle CAD virtuel initial de ladite superstructure (10, 10', 10", 10‴) dans laquelle une pluralité de trous d'implant (50) sont définis, où chacun d'eux :
- a une extension longitudinale le long d'un axe d'implant respectif (1) et
- est adapté pour être aligné avec un implant dentaire respectif (90) afin de lui être fixé au moyen d'un élément de fixation (61) qui passe à travers ledit trou d'implant (50) ;
b. sectionner ledit modèle CAD virtuel initial le long d'une ou plusieurs surfaces de coupe (70) de manière à subdiviser ledit modèle CAD en un composant extra-gingival (20, 21, 22, 23) et en un ou plusieurs composants de liaison intra-gingivaux (31, 32, 33, 34, 35, 36), en générant respectivement un module CAD virtuel dudit composant extra-gingival (20, 21, 22, 23) et un module CAD de chacun desdits un ou plusieurs composants de liaison intra-gingivaux (31, 32, 33, 34, 35, 36), chacun desdits un ou plusieurs composants de liaison intra-gingivaux (31, 32, 33, 34, 35, 36) comprenant au moins deux desdits trous d'implant (50) ;
c. pour chacun desdits composants de liaison intra-gingivaux (31, 32, 33, 34, 35, 36), définissant, dans ledit modèle CAD dudit composant extra-gingival (20, 21, 22, 23), au moins un trou de liaison (8) qui est adapté pour venir en prise avec un élément de liaison (18) destiné à fixer ledit composant extra-gingival (20, 21, 22, 23) audit composant de liaison intra-gingival (31, 32, 33, 34, 35, 36).

2. Procédé mis en oeuvre par ordinateur selon la revendication 1, **caractérisé en ce que** ledit au moins un trou de liaison (8) est défini dans une partie de ladite face linguale/palatale (42) qui est formée dans ledit composant extra-gingival (20, 21, 22, 23), de sorte qu'il n'est pas visible depuis le côté vestibulaire dans la configuration anatomique utilisée.

3. Procédé mis en oeuvre par ordinateur selon la revendication 1 ou 2, **caractérisé en ce que**, dans l'étape b., lesdits une ou plusieurs surfaces de coupe (70) sont définies de telle manière que ladite face vestibulaire (41) est complètement formée à l'intérieur dudit composant extra-gingival (20, 21, 22, 23) et est constituée par une seule surface qui s'étend vers le bas au moins jusqu'au plan gingival (G) dans la condition anatomique utilisée.

4. Procédé mis en oeuvre par ordinateur selon une ou plusieurs des revendications précédentes, **caractérisé en ce que** lesdites une ou plusieurs surfaces de coupe (70) comprennent des plans et/ou des surfaces courbes et/ou des surfaces irrégulières.

5. Procédé mis en oeuvre par ordinateur selon la revendication 1 ou 2, **caractérisé en ce que**, dans l'étape b., lesdites une ou plusieurs surfaces de coupe (70) sont définies de telle manière que ledit composant extra-gingival (20, 22, 23) comprend au moins l'un desdits trous d'implant (50) pour la fixation directe dudit composant extra-gingival (20, 22, 23) à au moins un implant dentaire respectif (90).

6. Procédé mis en oeuvre par ordinateur selon une ou plusieurs des revendications précédentes, **caractérisé en ce que** ledit au moins un trou de liaison (8) est défini de sorte qu'il est désaxé par rapport à tous lesdits implants dentaires (90) et/ou un nombre desdits trous de liaison (8) est défini qui est différent du nombre desdits implants dentaires (90).

7. Procédé pour fournir une superstructure (10, 10', 10", 10‴) pour une prothèse dentaire personnalisée d'un groupe de dents ou d'une arcade dentaire, **caractérisé en ce qu'**il comprend un procédé mis en oeuvre par ordinateur pour créer un modèle CAD virtuel d'une superstructure (10, 10', 10", 10‴), pour une prothèse dentaire personnalisée selon une ou plusieurs des revendications 1 à 6 et **en ce qu'**il comprend les étapes supplémentaires consistant à :
d. fournir, au moyen d'un système CAM (computer-aided manufacturing), respectivement ledit composant extra-gingival (20, 21, 22, 23) et ledit un ou plusieurs composants de liaison intra-gingivaux (31, 32, 33, 34, 35, 36) ;
e. associer, au moyen dudit au moins un élément de liaison (18), chaque composant de liaison intra-gingival (31, 32, 33, 34, 35, 36) avec le composant extra-gingival (20, 21, 22, 23).

8. Procédé selon la revendication 7, **caractérisé en ce que**, dans l'étape d. ou à un moment ultérieur, il comprend une étape consistant à :
- couvrir au moins une partie du composant de liaison intra-gingival (31, 32, 33, 34, 35, 36) avec un revêtement esthétique/fonctionnel.
